# EUROPEAN PATENT APPLICATION

(11) **EP 1 752 701 A1**
(43) Date of publication of application: **14.02.2007**
(21) Application number: 06014215.5
(22) Date of filing: 10.07.2006
(51) Int. Cl.: F16P 1/00, G08B 21/02

(54) **Safety device for a feeding belt and a waste material press**

(30) Priority: 20.07.2005 IT MI20051381
(71) Applicant: Ecoassistenza, 20080 Loc. S. Guiseppe, Vernate MI (IT)
(72) Inventor: Speri, Fausto, 27022 Casorate Primo (Pv) (IT)
(74) Representative: Mayer, Hans Benno

(57) **Abstract**

A safety device for a feeding belt and a waste material press said press being designed for pressing waste materials supplied by said feeding belt, provides that each press operator comprises an emitting device for emitting a codified and personal recognizing signal which can be detected by a detecting device, arranged at the press room inlet, that along the feeding belt supplying the press with said waste materials are also arranged detection devices for detecting a presence of a person having a signaling device, that as a person not provided with a detection recognizing device accesses the press room, an alarm signal is emitted and that, even in the presence of a person having a detecting or signaling device, an alarm signal is generated on the feeding belt, to switch off the operation of the feeding belt and the press.

## Description

### BACKGROUND OF THE INVENTION

The present invention relates to a safety device for a feeding or conveyor belt for feeding waste materials to a waste material press, to provide transportable bales.

It is known in the prior art to use for pressing several types of waste or refuse materials, large presses, conventionally comprising accumulating chambers supplied, through a feeding or conveyor belt, with the waste materials such as paper, paperboard, plastic materials or metal scraps to be pressed.

Said waste materials being usually supplied to the press by a great length feeding or conveying belt movable in a channel and along a slanted surface and ending at a press loading end.

As the press chamber has been sufficiently filled-in by waste materials, said waste materials are pressed by powerful hydraulic rams and the thus made bales are then strapped.

Both the above mentioned waste material press and feeding belt pertain to the prior art and accordingly they will not be disclosed in further details.

A drawback of the above mentioned prior waste material pressing system is that, should a person by chance fall into the channel in which the waste material feeding belt travels, a serious accident could occur, for example if the person, having fainted and fallen on the moving feeding belt, is not immediately noticed by the operators assigned to the press room.

### SUMMARY OF THE INVENTION

Accordingly, the aim of the invention is to overcome the above mentioned drawbacks by providing a safety device for an operator operating a waste material press, supplied with waste materials by a feeding or conveying belt.

The device according to the invention is characterized in that each operator accessing the press room is equipped with a recognizing or detecting signal emitting device adapted to emit a codified and personal recognizing signal for each press operator, which signal can be detected by a detecting device provided at the press room inlet, that along the waste material feeding belt are also provide a plurality of detecting devices for detecting the presence of a person provided with the signaling device, that if a person not provided with the detecting device accesses the press room, then an alarm signal is emitted and that, also in the case in which a person having the signaling device is present, on the feeding belt an alarm signal is generated thereby switching off the operation of the feeding belt and of the press.

### BRIEF DESCRIPTION OF THE DRAWINGS

The subject matter of the present invention will be disclosed in a more detailed manner hereinafter with reference to an embodiment thereof, given only by way of an example and shown in the accompanying drawings, where:
Figure 1 is a top plan view of an access region therefrom it is possible to access a press room;
Figure 2 is a schematic side view of a feeding or conveying belt for feeding waste or refuse materials to be pressed to a pressing press; and
Figure 3 is a schematic view showing a transmitter to be born by the press operators.

### DESCRIPTION OF THE PREFERRED EMBODIMENT

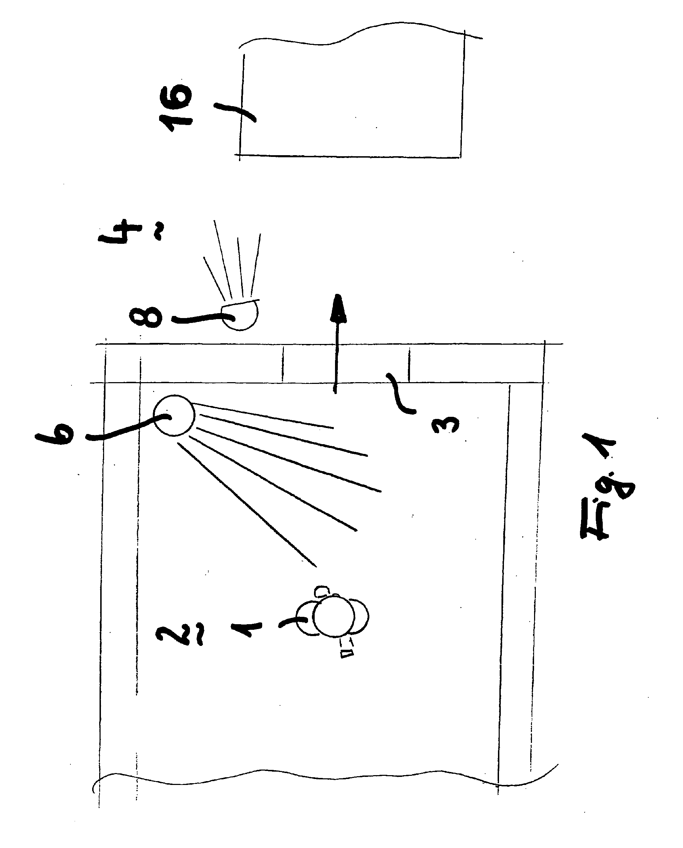

As shown in figure 1, an operator or person 1 can access from a room 2, through an outlet 3, to the room 4 of a press 16, including a large length feeding or conveying belt 5 and a waste material press 16.

In said room 2 is provided a detecting device 6 for detecting if the person 1 is equipped with a signaling device 7, including codified and customized signaling cards 200.

The device 6 is a codified and personal device, thereby allowing to monitor a proper operation of the electronic card assigned to a given operator, as well as inlet and output data related to the dangerous zone.

In said room 2 is moreover provided a red/green light signaling device 100, allowing an operator to access the press room only when a "green" light is on.

Then, if the device 6 detects that the person 1 is equipped with a safety device 7, then said person 1 will freely access, through the output 3, to the feeding belt 5 and press 16 room 4.

On the other hand, if the person 1 exits the room 2 without the signaling or detecting device 7, then this would be detected by the detecting device 6 which will immediately provide an alarm signal through an alarm device 8, for example a siren or other acoustic device.

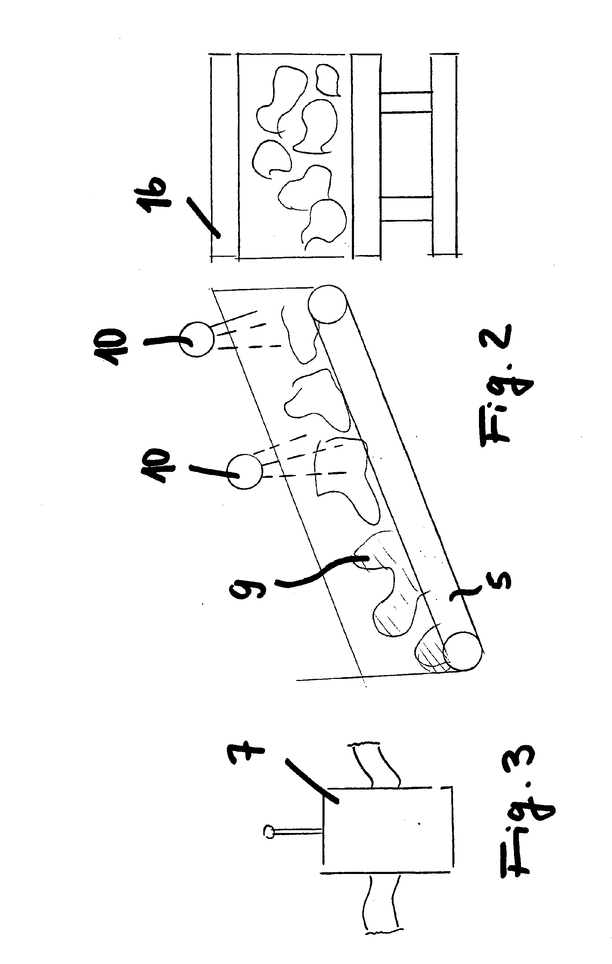

Figure 2 schematically shows the feeding or conveying belt 5 for feeding the waste or refuse materials 9.

Above said feeding belt 5 are provided further detecting devices 10 for detecting, for example in a case of an accidental falling on the belt 5 of a person having a signaling device 7, the presence of this person. Thus, through the device 8 an alarm signal will again be generated, while simultaneously switching off both the conveyor belt 5 and the driving of the press 16 closing means.

Considering that the conveying or feeding belt 5 is a comparatively long in length, to provide maximum safety, a plurality of detecting devices 10 are advantageously provided along the feeding or conveying belt 5.

Due to the obligation, valid for all the persons operating in the very dangerous region of the waste material feeding belt 5 (coupled to the waste material press 16), of moving in the press 16 shed with a signaling device 7 designed to emit signals to be detected by one or more detecting devices 6, 10 arranged outside of the press zone 16, as well as along the feeding belt 5 feeding the press 16 with the waste materials, maximum safety for the persons operating the pressing press is assured, in particular in performing dangerous operations near the feeding belt 5, for which it is frequently necessary to remove material pieces which must not be pressed, or for aligning, if it is necessary, projecting waste pieces to provide a proper supplying to the press 16.

## Claims

1. A safety device for a press (16) designed for pressing waste materials (9) supplied by a waste material feeding belt (5), **characterized in that** each person susceptible to access a press (16) room is equipped with an emitting device (7) adapted to emit a recognizing signal, said recognizing signal being codified and personal for each press operator, and adapted to be detected by a detecting device (6) arranged at a front inlet (3) of the press room (4), that along said waste material (9) feeding belt (5) are also arranged a plurality of detecting devices (10) for detecting the presence of a person having a signaling device (7), that, as a person (1) without a signaling device (7) accesses the press (16) room, then the device will not provide a free access signal, but an alarm signal and that, even if a person (1) having a signaling device (7) is present, on said feeding belt (5) an alarm signal will be generated thereby switching off the operation of said feeding belt (5) and press (16).

2. A safety device, according to claim 1, **characterized in that** the red/green light signaling device (100) is arranged in a room (2) preceding said press (16) room (4).

3. A safety device, according to claim 2, **characterized in that** when the "red" light of said light signaling device (100) is on, then the output doors of said room (2) will be locked.

4. A safety device, according to claim 2, **characterized in that** when the "green" light of said light signaling device (200) is on, then the output doors of said room (2) will be unlocked.

5. A safety device, according to claim 1, **characterized in that** each device (7) comprises an electronic card (100) including personal data of the bearer of said device (7).
